# EUROPEAN PATENT SPECIFICATION

(11) **EP 2 301 814 B1**
(45) Date of publication and mention of the grant of the patent: **27.02.2013**
(21) Application number: 09171561.5
(22) Date of filing: 29.09.2009
(51) Int. Cl.: B60R 21/38

(54) **Safety arrangement for a vehicle**
Sicherheitsanordnung für ein Fahrzeug
Agencement de sécurité pour véhicule

(43) Date of publication of application: 30.03.2011
(73) Proprietor: Ford Global Technologies, LLC, Dearborn, MI 48126 (US)
(72) Inventor: Erlingfors, Mats, 44465 Jörlanda (SE); Hallneus, Gunnar, 41671 Göteborg (SE); Fredriksson, Anders, 41467 Göteborg (SE)
(74) Representative: Widahl, Jenny Marie

(56) References cited:
- EP-A2- 1 393 999
- DE-A1- 10 204 594
- DE-A1- 10 314 968
- DE-A1-102004 032 315
- DE-A1-102006 055 489

## Description

### TECHNICAL FIELD

The invention relates to a safety arrangement for a vehicle having a bonnet being connected to the vehicle by hinges, wherein the safety arrangement comprises a raising member adapted to raise the bonnet in case of a collision with a pedestrian, and a catch member adapted to catch the bonnet so that it does not rise beyond a predetermined distance.

### BACKGROUND OF THE INVENTION

If a motor vehicle, such as a car, is involved in an accident in which the front part of the vehicle hits a pedestrian, it is not uncommon that the head of the pedestrian impacts on the bonnet of the vehicle. The bonnet may then deform to an extent that the head of the pedestrian impacts against the hard engine parts located beneath the bonnet, and the pedestrian may be severely injured. In order to reduce the severity of these accidents, it is well-known to use a deployable bonnet, e.g. by raising the rear part of the bonnet to an "impact position", so that the distance between the bonnet and the hard engine parts is increased. Moreover, the bonnet is in American English often called the hood.

There are a number of known designs, as described e.g. in US 6,964,316, wherein the bonnet is displaceable towards an "impact position" by means of multi-link hinges. The hinges hold the bonnet both in the normal closed position and in the "impact position".

It is further known to lift the bonnet to an "impact position" by means of an inflatable member such as an airbag. DE 102 04 594 discloses such an arrangement with features according to the preamble of claim1. The inflatable member may be located below the rear side of the bonnet at the centre of the vehicle. If a bonnet held by the hinges at the sides of the bonnet is raised by an inflatable member at the rear side central region, the central rear region of the bonnet is subjected to a force at a location which is rather distant from the supports at the hinges. As a result, the bonnet may deflect, e.g. bulge, or may even swing up and down around its equilibrium in the impact position. As a consequence thereof, there is a risk that the bonnet does not reach the desired impact position within the required time limit before the pedestrian may impact onto the bonnet. If the head of the pedestrian meets an up-going bonnet, extra injuries may result.

It is known from US 7,159,685 B2 by Knight-Newbury et al, to use a safety arrangement comprising a unit to be located beneath a bonnet of a motor vehicle. The unit is adapted to lengthen by means of an inflatable element in response to a signal from a sensor. The unit has a catch arrangement adapted to engage part of the bonnet structure so that part of the bonnet structure is engaged and retained when the length of the unit is increased.

Since the unit comprises both the inflatable element and the catch arrangement, they are connected to each other. The catch element may be adapted to retain a barb located at the under-surface of the bonnet. The suggested configuration implies the restriction that the catch element and the inflatable element are located in one unit.

### SUMMARY OF THE INVENTION

The object of the present invention is to overcome or ameliorate at least one of the disadvantages of the prior art, or to provide a useful alternative.

It is desirable to provide a safety arrangement, adapted to provide a stable bonnet impact position as fast as possible, preferably before the pedestrian hits the bonnet in case of a collision.

It is further desirable to provide a safety arrangement allowing the catch member to be located independently of the member raising the bonnet.

The object above may be achieved by the invention according to claim 1.

In a first aspect of the present invention there is provided a safety arrangement for a vehicle having a bonnet being connected to the vehicle by hinges, the hinges being located at the region of the bonnet located towards the windscreen of the vehicle. The safety arrangement comprises
- a raising member, adapted to raise the rear end of the bonnet in case of a collision with a pedestrian, and
- a catch member adapted to catch the bonnet so that it does not rise beyond a predetermined distance at the rear end,
wherein the catch member is separate from the raising member and located at a distance from the hinges of the bonnet.

Since the catch member is separate from the raising member, their positions can be chosen independently of each other. The catch member has its own connections to the body of the vehicle and the bonnet, respectively. Likewise, the raising member has its own connections to the body of the vehicle and the bonnet. One, two or more catch members may be used, as well as one, two or more raising members. The number of catch members may be the same as the number of raising members or the numbers may differ. Purely as an example, two catch members may be used together with one raising member. The catch member/s is/are adapted to provide a stable impact position for the bonnet, preferably before being impacted onto by the pedestrian. The catch member may prevent the bonnet from deflecting more than requested during the deployment. Moreover, deformations of the bonnet may be prevented. During normal opening and closing of the bonnet, the catch function is adapted not to be active.

The raising member may for example be an inflatable member, a pyrotechnical device, a mechanical spring, a compressed-air piston, an electrical lifter, a rack or a lifting arm. It should preferably be able to raise the bonnet in a few milliseconds. The inflatable member may be an airbag. One or more airbags may be used located beneath the bonnet. Alternatively a wide air bag container may be used.

Normally, one or more sensors are used to detect a collision with a pedestrian, e.g. that the bumper hits the legs of the pedestrian. In case of a collision at the front part of the vehicle, the raising member may be activated in order to raise the bonnet.

The catch member may be arranged so that it is activated as a function of the raising speed of the bonnet. The catch function is thus only activated, when the bonnet is raised by the raising member. When the bonnet is opened in a normal way to get access to the engine compartment, the catch function is not activated, and the bonnet can be lifted up over the predetermined distance mentioned above. Typical lifting speeds in the region of the catch member during normal opening is from slightly above 0 m/s up to 1.5 m/s and in some cases up to 3 m/s. On the other hand, when the raising member is activated, the bonnet reaches the impact position in a few milliseconds, corresponding to raising speeds above 10 m/s.

The catch member may be adapted to be activated by the raising member. The activation may for example be that the raising member moves the catch member into a certain position or influences its shape by deformation. The raising member may in that case be an inflatable element, which increases its size while raising the bonnet, thereby acting on the catch member.

As an alternative, the catch member may be activated directly by a sensor detecting the collision with the pedestrian. Purely as an example, the sensor may trigger a pyrotechnical unit acting on a member, which member in turn is adapted to interact with the catch member. The member may in that case be a pin, which is pushed to engage with the catch member by the pyrotechnical unit. When the member is engaged with the catch member, the bonnet cannot rise beyond the impact position.

With the suggested safety arrangement, it is possible to allow the distance between the catch member and the closest of the hinges to be at least 5% of the width of the bonnet, preferably 10% and most preferably 20%. Thereby it is possible to distribute the catch members along the rear region of the bonnet, so that they help to keep the bonnet in a stable state in the impact position. If only one catch member is used it may be located close to the centre of the rear end of the bonnet. If two catch members are used, they may as an example be located at a distance of about a third of the bonnet width from the closest hinge.

In an embodiment, the bonnet can be repositioned to its closed position, after having been raised by the raising member. The bonnet is in that case not more deformed than it is possible to close the bonnet and the vehicle can be driven in a normal way to e.g. a workshop. Depending on the type of catch member used, it may be necessary to for example push the catch member out of position or to reset the catch member before closing the bonnet. Afterwards it may be needed to restore the function of the safety arrangement, e.g. by exchanging the raising member.

The catch member/s may also be combined with local stiffening of the bonnet, e.g. by means of a reinforcement, e.g. an extra beam along the underside at the rear side of the bonnet.

The safety arrangement may further comprise a braking member adapted to slow down the raising movement of the bonnet. Thereby, the raising speed of the bonnet is retarded before it reaches the impact position and it does not stop all of a sudden, since a sudden stop may lead to undesired stresses or deformations of the materials in the safety arrangement, bonnet and/or vehicle body. However, the safety arrangement is designed to be able to withstand a certain amount of stresses, which may contribute to the braking effect. It is further possible to use a braking member, which in case of a pedestrian landing on the bonnet, may gradually lower the bonnet, thus damping the impact.

The braking member may be adapted to absorb energy. The braking member may be a deformable member transforming kinetic energy into deformation. The deformable member could be in the form of a curved loop or an S-shape, which deformable member is straightened while absorbing energy.

Other examples of braking members include a frictional brake, brakes based on the principle of mass inertia, a rubber bump, an air-dampener, a visco-dampener or a mechanical spring.

The braking member may be activated when the raising member is activated. Thereby it would be possible to open the bonnet in a normal way to get access to the engine compartment, when the braking member is not activated. Yet in case of a pedestrian collision, when the bonnet is raised by the raising member, the braking member is activated.

In an embodiment the catch member comprises at least one interlocking member. It may interlock with the bonnet and/or the vehicle body. Alternatively, two or more interlocking members may be used. In an embodiment, two interlocking members are used, that are adapted to interlock with each other. One of them may be attached to the bonnet and the other to the vehicle body.

The catch member may comprise a hook member and an eye member, forming two interlocking members adapted to interlock with each other when the raising member is activated. The eye member could for example be a loop or a metal piece comprising a hole for the hook to grip. The hook and/or the eye member may be deformable, in order to be able to absorb energy.

In an embodiment the catch member comprises at least one wire, cable, strap or belt. Such an embodiment may be designed so that the bonnet easily can be repositioned to its normal closed position.

The safety arrangement may further comprise a canal adapted to retain the wire, cable, strap or belt for the closed or opened bonnet position and wherein the canal further is adapted to release the wire, cable, strap or belt when the raising member is activated.

### BRIEF DESCRIPTION OF THE DRAWINGS

The present invention will hereinafter be further explained by means of non-limiting examples with reference to the appended figures wherein:
- Figure 1: is a schematic side view of a bonnet illustrating the closed, the open and the impact position of the bonnet,
- Figure 2: is a schematic cross-sectional view of a raised bonnet in impact position according to prior art,
- Figure 3: is a schematic cross-sectional view of a safety arrangement with the bonnet in impact position according to the invention,
- Figure 4a-b: is a schematic drawing of a safety arrangement according to a first embodiment of the invention during normal opening of the bonnet,
- Figure 5a-c: is a schematic drawing of the safety arrangement of Figure 4 during deployment of the bonnet,
- Figure 6a-b: is a schematic drawing of a safety arrangement according to a second embodiment of the invention,
- Figure 7a-b: is a schematic drawing of a safety arrangement according to a third embodiment of the invention,
- Figure 8a-b: is a schematic drawing of a safety arrangement according to a fourth embodiment of the invention,
- Figure 9a-c: is a schematic drawing of a safety arrangement according to a fifth embodiment of the invention.
- Figure 10a-c: is a schematic drawing of a safety arrangement according to a sixth embodiment of the invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other. The words front and rear used below relates to the motor vehicle, where front is the part coming first in the normal forward driving direction.

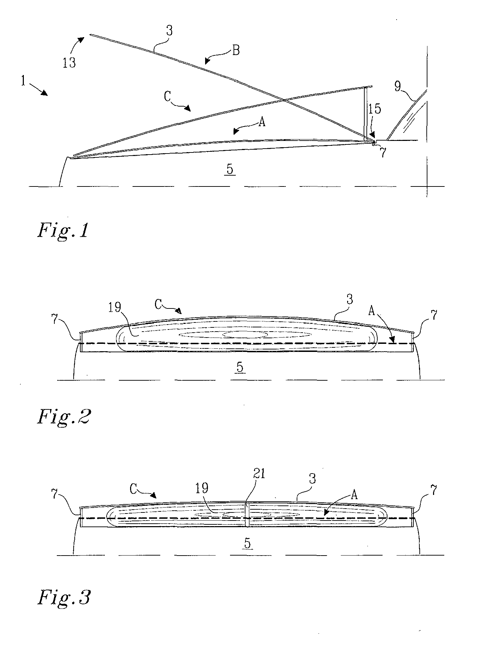

Figure 1 is a schematic view of the front end of a motor vehicle 1, here a car. The bonnet 3 covers the engine compartment 5 of the vehicle and allows access to the engine compartment 5 for maintenance and repair. The bonnet 3 is connected to the vehicle 1 by means of hinges 7, one at each side of the bonnet 3. The rear end of the bonnet 3 is directed towards the windscreen 9. Normally the bonnet 3 is in a closed position A covering the engine compartment 5. The bonnet 3 can be lifted to an open position B allowing access to the engine compartment 5. The vehicle then normally stands still. The illustrated example shows a bonnet 3 which is opened at its front end 13, but the bonnet may also be opened at its rear end 15, and in that case the hinges 7 would be at the front end.

In case of a collision with a pedestrian, e.g. a bumper hitting the legs of a pedestrian, which collision e.g. may be sensed by a sensor, the bonnet 3 is raised to an impact position C, whereby a distance is formed between the bonnet 3 and the hard parts of the engine, allowing deflection of the bonnet 3 without the risk of the head of the pedestrian hitting hard parts of the engine. The bonnet 3 may be raised at both ends, but normally the rear end 15 is raised to a higher position.

In Figure 2, illustrating a prior art solution in cross-sectional view through the rear region of the bonnet 3, the rear end 15 is in its impact position C. The normal closed position A is indicated as a dashed line. The bonnet 3 is illustrated at the very moment when it has been raised by an inflatable member 19, e.g. an airbag. Since the inflatable member 19 is in the centre of the rear region of the bonnet 3 and the supporting hinges 7 are at the sides of the rear region, the bonnet 3 cannot withstand the force it is subjected to and deflects, so that it bulges.

Figure 3 is a schematic cross-sectional view of a safety arrangement according to the invention. When the bonnet 3 is raised by the inflatable member 19 to the impact position, a catch member 21 catches the bonnet 3, so that it does not rise beyond a predetermined distance. One, two, three or more catch members 21 may be used, here exemplified by one in Figure 3. The catch members 21 may be placed at equal distances from each other. Preferably the catch members are located where the bonnet 3 is subjected to the highest raising forces, in this example in the vicinity of the centre of the inflatable member 19. The positions of the catch members 21 may also be adapted to the structure of the bonnet. A stable or stiff bonnet 3 may have fewer catch members 21, while a less stiff bonnet 3, e.g. made of thinner metal sheet, may have more catch members 21. The catch members 21 may also be combined with local stiffening of the bonnet 3, e.g. by means of a reinforcement, e.g. an extra beam along the underside close to the rear end 15 of the bonnet 3. By means of the catch member/s 21 it is possible to provide a stable bonnet impact position C as fast as possible, preferably before the pedestrian hits the bonnet 3. The bonnet deformations are reduced during bonnet deployment as compared to using catch elements at the hinges. Since the positions of the catch members 21 is independent of the position of the raising member/s 19, as many catch members 21 as needed may be used. The catch members 21 may also be positioned in the most appropriate way for the bonnet to reach a stable impact position. More than one raising member 19 may be used, and in that case the positions of the catch members 21 may be adapted to the positions of the raising members 19. During normal opening and closing of the bonnet 3, the catch function is not active.

Normally, one or more sensors are used to detect a collision with a pedestrian, e.g. that the bumper hits the legs of the pedestrian. In case of a collision, the raising member 19 is activated.

The safety arrangement may be velocity dependent so that the raising of the bonnet 3 to the impact position C only would occur if the vehicle has at least a certain velocity. At really slow velocities, a pedestrian would not be thrown onto the bonnet 3 and in that case, there is no need to raise the bonnet 3. Further, a normal opening of the bonnet 3 to get access to the engine compartment 5 only occurs when the vehicle stands still. The velocity of the vehicle may thus be used to distinguish in which way the bonnet 3 is raised, either to the normal open position B or to the impact position C.

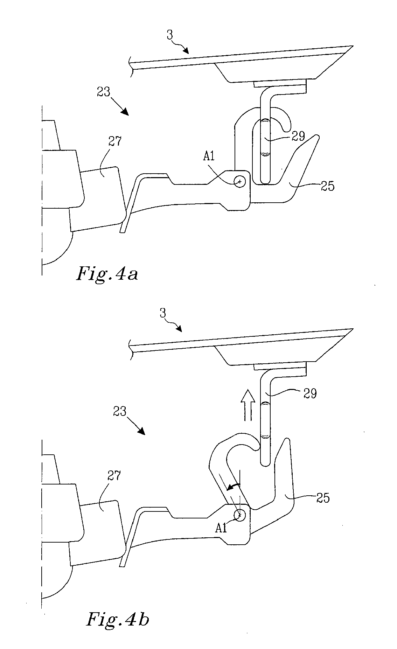

The safety arrangement may be arranged, so that the catch function is activated dependent on the raising speed of the bonnet. A normal bonnet opening to get access to the engine compartment 5 is made at much lower speed than the raising in case of a pedestrian collision. Typical lifting speeds for normal opening in the region of the catch member is from slightly above 0 m/s up to 1.5 m/s and in some cases up to 3 m/s. The raising speed of the bonnet may thus be used to distinguish in which way the bonnet 3 is raised. This is exemplified by Figures 4-8 below.

The safety arrangement may be deactivated, and thereby allowing normal opening, when the bonnet 3 is opened in order to get access to the engine compartment 5. As an example, the handle which is pushed or turned to release the bonnet 3 for normal opening at the same time deactivates the safety arrangement. When the bonnet is closed again, the safety arrangement is automatically activated again. A sensor may be used to sense if the bonnet is open or closed.

The catch member 21, may further be designed to constitute a deformation element, which takes up some of the energy of the pedestrian impact onto the bonnet by deformation, and which allows a possible gradual lowering of the bonnet 3.

In Figure 4a a detailed view of a latch 23 for the rear end 15 of a bonnet 3 is shown for a safety arrangement according to a first embodiment of the invention. The bonnet is in its closed position A. A first interlocking member, a hook 25, is fastened to the body 27 of the vehicle. The hook 25 is rotatable around the axis A1 between two end positions. Figure 4a illustrates the first end position. The hook 25 grips around a second interlocking member, here in the form of loop 29, making up an eye, in order to form a "hook and eye"-configuration.

Figure 4b illustrates when the bonnet 3 is lifted slowly, which would be the case when opening the bonnet to get access to the engine compartment 5. The hook 25 is biased, e.g. by a spring, to rotate towards the second end position, in which it is open and lets the loop 29 free. The bonnet 3 can thereafter be fully lifted to reach its open position B.

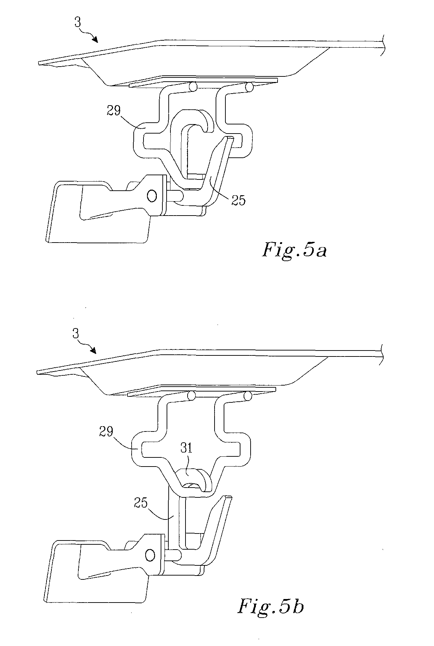

Figures 5a to 5c illustrate the same latch 23 as in Figures 4a and 4b during rising to the impact position C. Figure 5a is equivalent to Figure 4a but instead shows an oblique perspective view. The loop 29 is located in the hook 25. In Figure 5b, the raising member (not shown) has been activated and started to lift the bonnet 3 upwards. The loop 29 has reached the upper part 31 of the hook 25. Purely as an example, this could happen when the bonnet has been lifted between 10 and 40 mm, depending on the shapes and sizes of the hook 25 and the loop 29 respectively. The raising speed is in Figure 5b considerably higher than in the case of normal opening of the bonnet as for Figure 4b. Purely as an example, the bonnet 3 may reach its impact position C in a few milliseconds. The raising speed is so high, that the biasing of the hook 25 is not fast enough to open the hook 25, instead it remains in the first end position or slightly moved. The loop 29 is therefore retained by the hook 25.

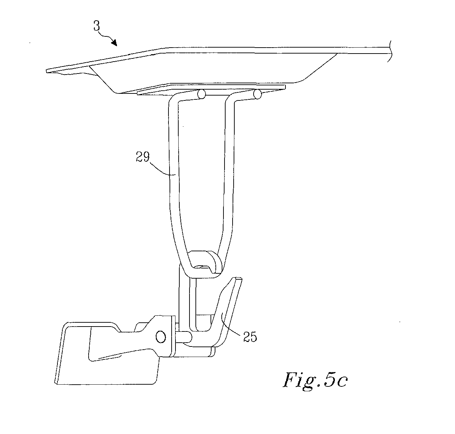

In Figure 5c, the bonnet 3 has reached its impact position C. The loop 29 is still retained by the hook 25. The loop 29 has deformed and its new shape corresponds to the raised distance of the bonnet 3, which purely as an example may be between 50 mm and 150 mm. Since some energy is needed to deform the loop 29, it will act as a braking element, slowing down the raising speed of the bonnet 3 before the bonnet 3 reaches the predetermined raised level. As an alternative, the loop 29 may be long enough to form the raised level like in Figure 5c already from the beginning, but a curved deformable loop 29 is often preferred since it is adapted to absorb kinetic energy. The length of the loop 29 will determine the raising distance.

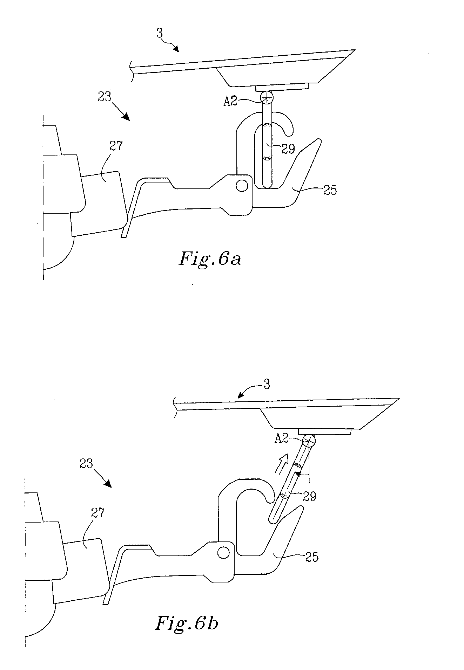

According to a second embodiment of the invention shown in Figure 6a-b, the hook 25 has a fixed position, while the loop 29 is rotatable around axis A2 between a first end position, shown in Figure 6a, and second end position, shown in Figure 6b. The catch function is similar to that in Figures 4 and 5. Figure 6a illustrates when the bonnet 3 is in its closed position. The loop is at its first end position.

Figure 6b illustrates normal opening of the bonnet 3, i.e. opening at low lifting speed to give access to the engine compartment 5. The loop 29 has rotated to the second end position, wherefrom it can get out of the hook 25. The loop 29 may be biased, e.g. by a spring, to rotate towards the second end position. The bonnet 3 can thereafter be fully lifted to reach its open position B.

At fast raising speed, i.e. in order to reach the impact position C, the loop 29 will be retained by the hook 25 (not illustrated), since the biasing is not letting the loop 29 rotate fast enough to reach the position, wherein the loop 29 gets out of the hook 25. The loop 29 therefore instead remains in the first end position or slightly moved. The loop 29 is therefore retained by the hook 25.

The configurations of Figures 4 and 6 may be reversed, so that instead the first interlocking member, here the hook 25, is fastened to the bonnet 3 and the second interlocking member, here the loop 29, to the body 27 of the vehicle. Suitable material for the interlocking members is e.g. metal. The loop 29 may be a wire, a bent sheet of metal or a textile moulded into plastic to give it its shape. The second interlocking member may have any shape, as long as it is adapted to act as a catch for the raising movement. It may for example be a metal piece having a hole that the hook 25 can grip. The metal piece may have a curved shape, for example S-shape, to be deformable. A sensor may be used to detect the position of the hook 25.

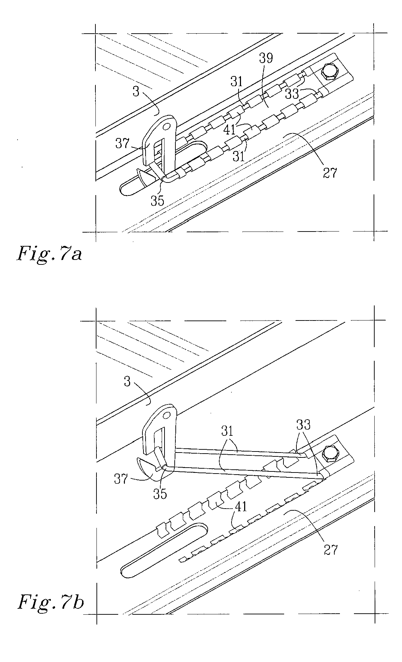

In Figure 7a third embodiment of the invention is shown. A double-folded wire 31 of a predefined length is fastened at a first end 33, the free ends of the wire, to the body 27 of the vehicle and at a second end 35, the doubled end, it goes through a hook 37 fastened at the bonnet 3. The hook 37 has two end positions, may be biased and works as explained above for the hook 25 in Figure 4. The double-folded wire 31 runs in a canal 39 having engaging hooks 41 engaging the wire 31. At normal opening of the bonnet 3 to get access to the engine compartment 5 (not illustrated), the hook 37 is in its open position and the wire 31 is released from the hook 37. Thus the engagement of the wire 31 is not influenced. However, when raising the bonnet 3 in case of a pedestrian collision, the hook 37 grips the wire 31, and the wire 31 is pulled out of the engaging hooks 41, so that the bonnet 3 can reach the impact position, as seen in Figure 7b. An advantage of this embodiment is that the bonnet 3 easily can be restored to its normal closed position again. One, two or more engaging hooks 41 may be used to keep the wire 31 in the canal 39. The configuration may also be reversed, with the wire 31 in the bonnet 3 and the hook 37 in the vehicle body 27. Instead of the illustrated double-folded wire 31, a single wire, a cable, a strap or a belt may be used. Suitable materials are for example metal, plastic or textile. The canal 39 may be made of plastic or metal. It may be a separate piece or unitary formed in the bonnet 3 or vehicle body 27. In a similar way to what is mentioned above for Figures 4-6, the activation of the disengagement of the wire 31 from the hooks 41 may be made dependent on the velocity of the vehicle and/or the raising speed of the opening of the bonnet 3.

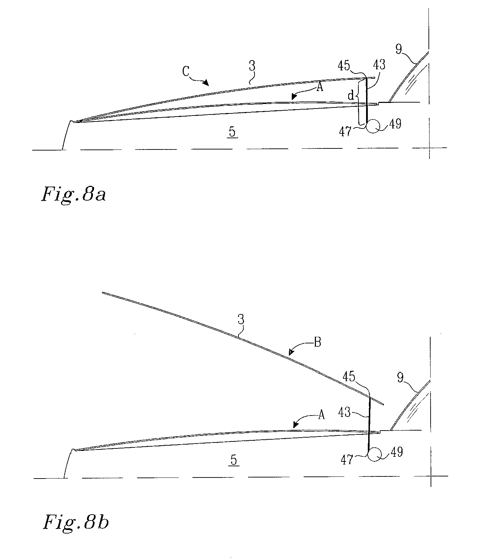

A fourth embodiment of the invention is illustrated in Figures 8a and b. In Figure 8a, both the closed position A of the bonnet 3 and the impact position C are illustrated. The windscreen 9 is located at the right-hand side of the Figure. A cable 43 is at a first end 45 fastened at the bonnet 3. The other end 47 is fastened to a roll 49, whereupon a part of the cable 43 is rolled. When the bonnet 3 is raised in case of a pedestrian collision, the cable 43 is unwound from the roll 49. After a certain distance d, corresponding to the height of the impact position C, the cable 43 is stopped, e.g. by a stopper in the roll 49. The roll 49 may further have a braking mechanism, so that the cable 43 does not stop suddenly. An advantage of this embodiment is that the bonnet 3 easily can be restored to its normal closed position again. The configuration may also be reversed, with the roll 49 fastened at the bonnet 3.

Figure 8b illustrates the normal opening position B of the bonnet 3 to get access to the engine compartment 5. No stop of the cable 43 is activated and the cable 43 is free to extend for the entire opening. In a similar way to what is mentioned above for Figures 4-6, the activation of the stop of the cable 43 may be made dependent on the velocity of the vehicle and/or the speed of the opening of the bonnet 3. The cable 43 may as an alternative to the roll 49 be extended from a linear magazine. Instead of the cable 43, a wire, a strap or a belt may be used. Suitable materials are for example metal, plastic or textile.

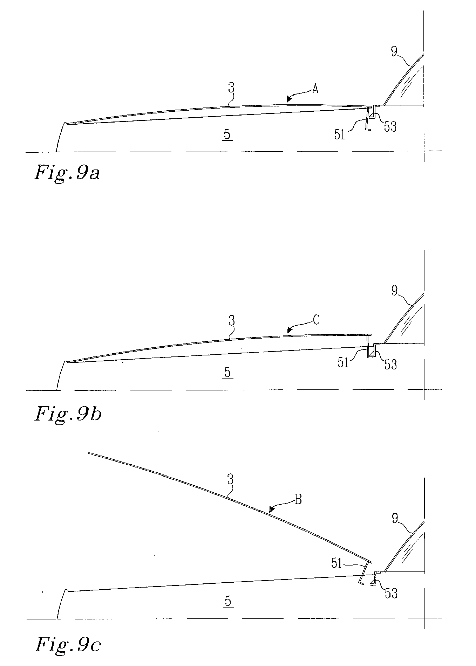

Figures 9a-c illustrates a fifth embodiment of the invention. An interlocking member 51, here a hook 51, is fastened to the bonnet 3. A receiving structure 53 is fastened to the body of the vehicle. In the normal closed position A in Figure 9a the hook 51 does not engage with the receiving structure 53.

When the raising member (not shown) is activated and the bonnet is raised to the impact position C, the hook 51 is engaged by the receiving structure 53, which stops the bonnet 3 from rising any further. During normal opening of the bonnet 3 to the open position B, as illustrated in Figure 9c, the hook 51 passes outside the receiving structure 53.

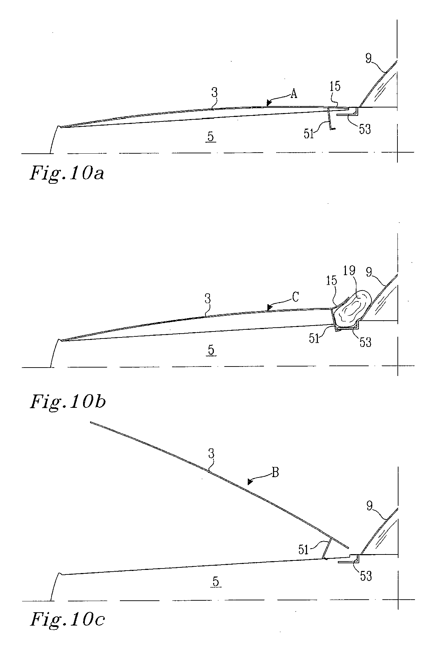

Figures 10a-c illustrates a sixth embodiment of the invention. Similar to Figure 9, an interlocking member 51 is fastened to the bonnet and a receiving structure 53 to the body of the vehicle. In the normal closed position A in Figure 10a the hook 51 does not engage with the receiving structure 53. In the case of a collision with a pedestrian, the bonnet 3 is raised by the raising member 19, here in the form of an airbag. The inflating airbag deforms the rear end 15 of the bonnet 3, such that the hook 51 is turned towards the receiving structure 53 until they are overlapping. When the hook 51 is engaging with the receiving structure 53, the raising movement is stopped and the bonnet 3 has reached its impact position C. If desired, a braking element may be used, for example designing the hook 51 or the receiving structure 53 as a deformable element, similar to the loop 29 of Figure 4. During normal opening of the bonnet 3 to the open position B, as illustrated in Figure 10c, the hook 51 passes outside the receiving structure 53.

An advantage of the fifth and sixth embodiments is that no moving parts are used in the catch member. The configuration of Figures 9a-c and 10a-c may be reversed, with the hook 51 in the body structure of the vehicle and the receiving structure 53 in the bonnet 3.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A safety arrangement for a vehicle (1) having a bonnet (3) being connected to said vehicle (1) by hinges (7), said hinges (7) being located at the region of the bonnet (3) located towards the windscreen (9) of said vehicle (1), said safety arrangement comprising
- a raising member (19), adapted to raise the rear end of said bonnet (3) in case of collision with a pedestrian, and
- a catch member (21) adapted to catch said bonnet (3) so that it does not rise beyond a predetermined distance at the rear end,
**characterized in that**
said catch member (21) is separate from said raising member (19) and located at a distance from said hinges (7) of said bonnet (3).

2. The safety arrangement according to claim 1, wherein said catch member (21) is activated as a function of the raising speed of the bonnet (3).

3. The safety arrangement according to any one of the preceding claims, wherein the catch member (21) is adapted to be activated by the raising member (19).

4. The safety arrangement according to any one of the preceding claims, wherein said raising member (19) is an inflatable member, such as an airbag, a pyrotechnical device, a mechanical spring, a compressed-air piston, an electrical lifter, a rack or a lifting arm.

5. The safety arrangement according to any one of the preceding claims, wherein the distance between the catch member (21) and the closest of said hinges (7) is at least 5% of the width of the bonnet (3), preferably 10% and most preferably 20%.

6. The safety arrangement according to any one of the preceding claims, wherein the bonnet (3) can be repositioned to its closed position (A), after having been raised by the raising member (19).

7. The safety arrangement according to any one of the preceding claims, wherein the safety arrangement further comprises a braking member adapted to slow down the raising movement of the bonnet (3).

8. The safety arrangement according to claim 7, wherein said braking member is adapted to absorb energy.

9. The safety arrangement according to claim 7 or 8, wherein said braking member is a deformable member (29).

10. The safety arrangement according to any one of claims 7-9, wherein said braking member is activated when the raising member (19) is activated.

11. The safety arrangement according to any one of the preceding claims, wherein the catch member (21) comprises at least one interlocking member (25, 29; 43; 51).

12. The safety arrangement according to any one of the preceding claims, wherein the catch member (21) comprises a hook (25) member and an eye member (29), adapted to interlock with each other when the raising member (19) is activated.

13. The safety arrangement according to any one of the preceding claims, wherein the catch member (21) comprises at least one wire (31), cable (43), strap or belt.

14. The safety arrangement according to claim 13, wherein the safety arrangement further comprises a canal (39) adapted to retain said wire (31), cable (43), strap or belt in closed (A) or opened bonnet (3) position (B) and wherein said canal (39) further is adapted to release said wire (31), cable (43) strap or belt when the raising member (19) is activated.

## Patentansprüche

1. Sicherheitsanordnung für ein Fahrzeug (1) mit einer Motorhaube (3), die über Scharniere (7) mit dem Fahrzeug (1) verbunden ist, die in dem Bereich der Motorhaube (3) angeordnet sind, der zur Windschutzscheibe (9) des Fahrzeugs (1) hin angeordnet ist, wobei die Sicherheitsanordnung Folgendes umfasst:
- ein Hebeelement (19), das geeignet ist, bei einem Zusammenstoß mit einem Fußgänger das hintere Ende der Motorhaube (3) anzuheben, und
- ein Arretierungselement (21), das geeignet ist, die Motorhaube (3) zu arretieren, sodass sie sich am hinteren Ende nicht über eine vorbestimmte Strecke hinaus anhebt,
**dadurch gekennzeichnet, dass**
das Arretierungselement (21) von dem Hebeelement (19) getrennt ist und von den Scharnieren (7) der Motorhaube (3) entfernt angeordnet ist.

2. Sicherheitsanordnung nach Anspruch 1, wobei die Aktivierung des Arretierungselements (21) eine Funktion der Anhebegeschwindigkeit der Motorhaube (3) ist.

3. Sicherheitsanordnung nach einem der vorhergehenden Ansprüche, wobei das Arretierungselement (21) geeignet ist, durch das Hebeelement (19) aktiviert zu werden.

4. Sicherheitsanordnung nach einem der vorhergehenden Ansprüche, wobei das Hebeelement (19) ein aufblasbares Element wie ein Airbag, eine pyrotechnische Vorrichtung, eine mechanische Feder, ein Druckluftkolben, ein elektrischer Heber, eine Zahnstange oder ein Hebearm ist.

5. Sicherheitsanordnung nach einem der vorhergehenden Ansprüche, wobei der Abstand zwischen dem Arretierungselement (21) und dem nächstliegenden der Scharniere (7) mindestens 5%, vorzugsweise 10% und besonders bevorzugt 20% der Breite der Motorhaube (3) beträgt.

6. Sicherheitsanordnung nach einem der vorhergehenden Ansprüche, wobei die Motorhaube (3) wieder in ihre geschlossene Position (A) positioniert werden kann, nachdem sie durch das Hebeelement (19) angehoben worden ist.

7. Sicherheitsanordnung nach einem der vorhergehenden Ansprüche, wobei die Sicherheitsanordnung ferner ein Bremselement umfasst, das geeignet ist, die Hebebewegung der Motorhaube (3) zu verlangsamen.

8. Sicherheitsanordnung nach Anspruch 7, wobei das Bremselement geeignet ist, Energie zu absorbieren.

9. Sicherheitsanordnung nach Anspruch 7 oder 8, wobei das Bremselement ein deformierbares Element (29) ist.

10. Sicherheitsanordnung nach einem der Ansprüche 7 - 9, wobei die Aktivierung des Bremselements bei der Aktivierung des Hebeelements (19) erfolgt.

11. Sicherheitsanordnung nach einem der vorhergehenden Ansprüche, wobei das Arretierungselement (21) mindestens ein Verriegelungselement (25, 29; 43; 51) umfasst.

12. Sicherheitsanordnung nach einem der vorhergehenden Ansprüche, wobei das Arretierungselement (21) ein Hakenelement (25) und ein Ösenelement (29) umfasst, die geeignet sind, verriegelnd ineinander einzugreifen, wenn das Hebeelement (19) aktiviert wird.

13. Sicherheitsanordnung nach einem der vorhergehenden Ansprüche, wobei das Arretierungselement (21) mindestens einen Draht (31), ein Kabel (43), einen Gurt oder einen Riemen umfasst.

14. Sicherheitsanordnung nach Anspruch 13, wobei die Sicherheitsanordnung ferner einen Kanal (39) umfasst, der geeignet ist, den Draht (31), das Kabel (43), den Gurt oder den Riemen in geschlossener (A) oder geöffneter (B) Position der Motorhaube (3) zu halten, und wobei der Kanal (39) ferner geeignet ist, bei Aktivierung des Hebeelements (19) den Draht (31), das Kabel (43), den Gurt oder den Riemen freizugeben.

## Revendications

1. Agencement de sécurité pour un véhicule (1) ayant un capot (3) connecté audit véhicule (1) par des charnières (7), lesdites charnières (7) étant situées au niveau de la région du capot (3) située vers le pare-brise (9) dudit véhicule (1), ledit agencement de sécurité comprenant :
- un organe de soulèvement (19) prévu pour soulever l'extrémité arrière dudit capot (3) en cas de collision avec un piéton, et
- un organe de blocage (21) prévu pour bloquer ledit capot (3) de manière à ce qu'il ne se soulève pas au-delà d'une distance prédéterminée à l'extrémité arrière,
**caractérisé en ce que**
ledit organe de blocage (21) est séparé dudit organe de soulèvement (19) et est situé à une certaine distance desdites charnières (7) dudit capot (3).

2. Agencement de sécurité selon la revendication 1, dans lequel ledit organe de blocage (21) est activé en fonction de la vitesse de soulèvement du capot (3).

3. Agencement de sécurité selon l'une quelconque des revendications précédentes, dans lequel l'organe de blocage (21) est prévu pour être activé par l'organe de soulèvement (19).

4. Agencement de sécurité selon l'une quelconque des revendications précédentes, dans lequel ledit organe de soulèvement (19) est un organe gonflable, tel qu'un airbag, un dispositif pyrotechnique, un ressort mécanique, un piston à air comprimé, un dispositif de levage électrique, une crémaillère ou un bras de levage.

5. Agencement de sécurité selon l'une quelconque des revendications précédentes, dans lequel la distance entre l'organe de blocage (21) et la plus proche des charnières (7) est d'au moins 5 % de la largeur du capot (3), de préférence 10 % et le plus préférablement 20 %.

6. Agencement de sécurité selon l'une quelconque des revendications précédentes, dans lequel le capot (3) peut être repositionné dans sa position fermée (A) après avoir été soulevé par l'organe de soulèvement (19).

7. Agencement de sécurité selon l'une quelconque des revendications précédentes, dans lequel l'agencement de sécurité comprend en outre un organe de freinage prévu pour ralentir le mouvement de soulèvement du capot (3).

8. Agencement de sécurité selon la revendication 7, dans lequel ledit organe de freinage est prévu pour absorber de l'énergie.

9. Agencement de sécurité selon la revendication 7 ou 8, dans lequel ledit organe de freinage est un organe déformable (29).

10. Agencement de sécurité selon l'une quelconque des revendications 7 à 9, dans lequel ledit organe de freinage est activé lorsque l'organe de soulèvement (19) est activé.

11. Agencement de sécurité selon l'une quelconque des revendications précédentes, dans lequel l'organe de blocage (21) comprend au moins un organe d'emboîtement (25, 29 ; 43 ; 51).

12. Agencement de sécurité selon l'une quelconque des revendications précédentes, dans lequel l'organe de blocage (21) comprend un organe de crochet (25) et un organe d'oeillet (29), prévus pour s'emboîter l'un avec l'autre lorsque l'organe de soulèvement (19) est activé.

13. Agencement de sécurité selon l'une quelconque des revendications précédentes, dans lequel l'organe de blocage (21) comprend au moins un fil (31), un câble (43), une sangle ou une courroie.

14. Agencement de sécurité selon la revendication 13, dans lequel l'agencement de sécurité comprend en outre un canal (39) prévu pour retenir ledit fil (31), câble (43), sangle ou courroie dans une position de capot (3) fermé (A) ou de capot (3) ouvert (B) et dans lequel ledit canal (39) est en outre prévu pour libérer ledit fil (31), câble (43), sangle ou courroie lorsque l'organe de soulèvement (19) est activé.
